(19)

Europäisches
Patentamt

European
Patent Office

Office européen
des brevets

(11) **EP 4 544 891 B1**

(12) **EUROPEAN PATENT SPECIFICATION**

(45) Date of publication and mention
of the grant of the patent:
**21.01.2026  Bulletin 2026/04**

(21) Application number: **23206503.7**

(22) Date of filing: **27.10.2023**

(51) International Patent Classification (IPC):
***A01B 59/00*** *(2006.01)*        ***A01B 71/02*** *(2006.01)*

(52) Cooperative Patent Classification (CPC):
**A01B 59/004; A01B 71/02**

(54) **METHOD FOR CONTROLLING AN INCLINATION ANGLE OF AN IMPLEMENT, AND WORK MACHINE**

VERFAHREN ZUR STEUERUNG EINES NEIGUNGSWINKELS EINES ARBEITSGERÄTS UND ARBEITSMASCHINE

PROCÉDÉ DE COMMANDE D'UN ANGLE D'INCLINAISON D'UN OUTIL ET MACHINE DE TRAVAIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**30.04.2025   Bulletin 2025/18**

(73) Proprietor: **Kverneland Group Nieuw-Vennep B.V. 2153 LR Nieuw-Vennep (NL)**

(72) Inventor: **VAN BRUGGEN, Rene 3445XC Woerden (NL)**

(74) Representative: **Bittner, Thomas L.
Boehmert & Boehmert
Anwaltspartnerschaft mbB
Pettenkoferstrasse 22
80336 München (DE)**

(56) References cited:
**EP-A1- 3 721 691     EP-A1- 3 797 568
EP-B1- 3 791 704     US-A1- 2019 029 164**

Processed by Luminess, 75001 PARIS (FR)

**Description**

The invention relates to a method for controlling an inclination angle of an implement, and to a work machine.

Background

Implements and work machines having an implement are used in agriculture. For instance, an implement may be or comprise a spreader which is employed to supply crops with nutrients. The work machine may comprise a work vehicle, such as a tractor, to which the implement may be coupled.

In some applications, an inclination of the implement is crucial. For instance, when spreading nutrients onto crops or plants, the distance over which the nutrients are spread may depend on the inclination angle of the implement and/or the spreading height over the crops or plants. Further, the spreading distance may also depend on the type of nutrient and/or its composition or the crop height. The spreading height can vary during spreading due e.g. system load, crop height, soil conditions etc., so that the spreading angle may need to be varied accordingly. If the implement (e.g. spreader) is not inclined correctly, some crops or plants may not receive the right amount of nutrients.

A method for controlling an inclination angle of an implement is known from EP 3 434 086 B1.

Summary

The method known form the prior art is based on geometric considerations of the hitch and the implement, and requires multiple steps as well as determination of several input variables. Thus, small inaccuracies in determining the input variables may accrue. Further, the time necessary to perform the calculation is somewhat longer, which may impede a quick control of the inclination. Furthermore, when e.g. a hitch configuration is changed or a connection of the hitch and/or implement to the work machine is different or changed, (e.g. when using a secondary connection point), deviations might occur.

It is therefore an object of the present invention to provide a method which is simpler, but highly accurate and more robust.

This object is achieved with a method according to claim 1 and a work machine according to claim 13. The dependent claims relate to particularly preferred embodiments.

A first aspect of the invention relates to a method for controlling an inclination angle of an implement for a work machine, the method comprising the steps:

- providing a desired inclination angle $\alpha$ of the implement;
- determining a hitch height h of a hitch supporting the implement;
- Setting a top link length I of a top link of the hitch, wherein the top link length I is determined by a regression model having the hitch height h and the desired inclination angle $\alpha$ as input variables, the regression model having at least two parameters.

The top link length I may be set and/or controlled such that that an actual inclination angle $\varphi$ of the implement is equal to the desired inclination angle $\alpha$, and/or at least substantially equal. The top link length I may be set and/or controlled such that a difference $\delta$ of the actual inclination angle $\varphi$ of the implement and the desired inclination angle $\alpha$ vanishes, is zero and/or substantially zero. In some embodiments, the regression model has at least one term related to and/or proportional to the hitch height h and at least one term related to and/or proportional to the desired inclination angle $\alpha$. Alternatively or additionally, the regression model has at least one term comprising a product of hitch height h and the desired inclination angle $\alpha$.

It may be provided that the desired inclination angle $\alpha$ may be defined positive in counterclockwise direction from a reference plane, such as e.g. the horizon and/or ground. It may be provided that the actual inclination angle $\varphi$ may be defined positive in counterclockwise direction from a reference plane, such as e.g. the horizon and/or ground. When the desired inclination angle $\alpha$ and/or the actual inclination angle $\varphi$ are defined differently, e.g. positive in clockwise direction and/or to a different reference plane, the method can be easily modified accordingly. The actual inclination angle $\varphi$ may depend on the top link length I and/or the hitch height h.

In some embodiments, the regression model may be given by

$$l = A \cdot h \cdot \alpha + B \cdot h + C \cdot \alpha + D$$

wherein A, B, C and D are the parameters of the regression model. The regression model may have four parameters.

The regression model is not necessarily limited to the above equation. The regression model may be formulated differently, and/or may comprise fewer or additional terms. The regression model may be or comprise a linear regression model and/or a non-linear regression model. In some embodiments, the regression model may be or comprise machine learning model, such as e.g. a neural network, a support vector machine or the like. In some embodiments, the machine learning model may be or comprise a kernel machine. The parameters of the regression model may be or comprise weights of the machine learning model. The regression model determines the top link length as a function of the input variables. The regression model may have more than two, and/or more than four parameters.

In some embodiments, the desired inclination angle $\alpha$ and the hitch height h may be the only input variables, and/or the regression model may have only the desired inclination angle $\alpha$ and the hitch height h as input variables. In some other embodiments, the regression model may comprise additional input variables.

The method according to the invention and the resulting inclination angle of the implement can be highly accurate. Any differences between the inclination angle as resulting from setting the top link length l according to the method according to the invention and the desired inclination angle can be very small or negligible, or even vanish. Further, the top link length l can be easily and quickly calculated, such that the control of the inclination of the implement can be carried out quickly and/or on-the-fly. Moreover, the number of input variables is low, which facilitates the control. In particular, given the parameters, e.g. A, B, C and D, in some embodiments only the hitch height and the desired inclination angle is required. Thus, fewer quantities have to be determined, measured and/or provided, and also errors such as e.g. due to erroneous or inaccurate measurements can be reduced.

The hitch may comprise a lower link arm. The implement may be supported, connected and/or coupled to the lower link arm, and/or the top link. The hitch may be or comprise a rear hitch. For example, the hitch may be arranged at the rear of the work vehicle. Alternatively, the hitch may be or comprise a front hitch. For example, the hitch may be arranged at the front of the work vehicle.

Setting the top link length l may be or comprise calculating the top link length l. Setting the top link length l may comprise changing the length of the top link, and/or extending or retracting the top link.

At least some, multiple or all of the steps may be computer-implemented. The method may be carried out by a control unit.

It may be provided that at least one, several or all steps of the method may be repeated. In some embodiments, the steps may be repeated at given or recurring times, such that the inclination angle may be controlled e.g. when or while the work machine and/or implement is operated.

The control of the inclination angle may be combined with a control of the hitch height h. The control of the inclination angle may be carried out simultaneously with a control of the hitch height h. The control of the inclination angle may be carried out alternating with a control of the hitch height h.

The top link length may be set or changed such that an actual inclination angle $\varphi$ can be equal, or at least substantially equal, to the desired inclination angle $\alpha$.

The desired inclination angle $\alpha$ can be modified by an offset $\theta$, $\alpha \rightarrow \alpha - \theta$. The inclination angle $\alpha$ can be modified before setting or determining the top link length l. Alternatively or additionally, when setting the top link length l, the offset $\theta$ can be subtracted from the desired inclination angle $\alpha$. In some embodiments, the offset can be defined to be positive in a counterclockwise direction from a reference plane, e.g. ground and/or the horizon. Alternatively, it may be provided that the offset $\theta$ can be added to the desired inclination angle $\alpha$, e.g. depending on the definition of the offset angle and/or depending on whether it is defined positive clockwise or counterclockwise. In some embodiments, taking the offset into account and/or modifying the desired inclination $\alpha$ by offset $\theta$ may comprise or involve that the regression model is given by and/or modified to

$$l = A \cdot h \cdot (\alpha - \theta) + B \cdot h + C \cdot (\alpha - \theta) + D \,,$$

with A, B, C and D as parameters of the regression model. The offset may be due to a hinge effect, as e.g. described below.

The parameters of the regression model, e.g. the parameters A, B, C and D, can be determined by providing a number of tuples which may be equal to the number of parameters. Alternatively, the parameters of the regression model, e.g. the parameters A, B, C and D, can be determined by providing a number of data tuples which may be larger than the number of parameters. Each data tuple can comprise a top link length l, a hitch height h and a reference inclination angle of the implement. The reference inclination angle may be the inclination angle of the implement for the corresponding values of the top link length l and hitch height h. The reference inclination angle may be the inclination angle of the implement resulting from the corresponding values of the top link length l and hitch height h. It may be provided that the reference **inclination** angle is defined with respect to some given orientation and/or offset of the implement 5. In some embodiments, the reference inclination angle may be equal to a true and/or actual inclination angle $\varphi$ of the implement, e.g. for corresponding values of the top link length l and hitch height h. When the number of data tuples is equal to the number of parameters, the regression model may exactly fit the data tuples.

The reference inclination angle may be defined positive in counterclockwise direction relative to a reference plane, e.g. ground and/or the horizon. In some embodiments, the reference plane of the reference inclination angle may be the same reference plane as of desired inclination angle $\alpha$ and/or actual inclination angle $\varphi$. When the reference planes differ, the method may be easily modified to take these differences into account, e.g. incorporate a (then known) angle between the respective reference planes.

The parameters of the regression model, e.g. A, B, C and D, can be determined by solving a system $M \cdot x = t$ when the number of parameters is equal to the number of data tuples. The parameters of the regression model, e.g. A, B, C and D, can be determined by minimizing the error $\varepsilon$ of a system $M \cdot x = t + \varepsilon$ when the number of parameters is smaller than the number of data tuples. When the number of data tuples is equal to the number of parameters, the error $\varepsilon$ may be zero. When the number of data tuples is equal to the number of parameters, the regression model may exactly fit the data tuples. M can be a matrix comprising the reference inclination angles and the hitch heights h of the data tuples, x can be a vector comprising the parameters, e.g. A, B, C and D, and t can be a vector comprising the top link lengths of the data tuples.

At least one, multiple or all data tuples may be provided by moving the implement to distinct positions. In case of four parameters, e.g. A, B, C and D, the data tuples may be provided e.g. by moving the implement to four or more different positions. It may be provided that in each (distinct) position, at least one of top link length l, hitch height h and/or reference inclination angle may be different. In each position, at least one of top link length l, hitch height h and/or reference inclination angle may be different to at least one respective value thereof in at least one other position. Thus, at least one, multiple or all the data tuples may be provided by a calibration, wherein the number of distinct positions may be equal to the number of data tuple to be provided by the calibration.

After moving the implement in any of the distinct positions, the top link length l, hitch height h and reference inclination angle of the implement can be determined and stored in a data storage. Determining the top link length l, hitch height h and/or reference inclination angle of the implement may comprise measuring the top link length l, hitch height h and/or reference inclination angle of the implement, and/or measuring a characteristic which may be used or may be suitable to determine measuring the top link length l, hitch height h and/or reference inclination angle of the implement.

The data storage may be or comprise a memory, or the like. In some embodiments, the determined data tuples may be sent to an external server and/or external device.

In some embodiments, at least one, multiple or all data tuples may be provided by an external server and/or external device. Alternatively or additionally, it may be provided that at least one, multiple or all parameters of the regression model may be provided by an external server and/or external device. The at least one data tuple provided by the external server and/or the external device may be sent or transmitted to the control unit and/or be saved or stored in the data storage. Parameters and/or data tuples stored in the data storage may be recalled from data storage, e.g. when needed or required by the control unit.

Alternatively or additionally, at least one, multiple or all of the data tuples may be provided by solving a full geometry model of the hitch for the top link length l. It may be provided that a data tuple may be given or provided by calculating the top link length l as given by the full geometry model, and then forming the data tuple with the calculated top link length and the respective reference inclination angle and/or the hitch height h. It may be provided that the data tuple may be formed only with the calculated top link length and the respective reference inclination angle and/or the hitch height h, where other geometric inputs required by the full geometry model to calculate the top link length l may be discarded and/or nor used to provide or form the data tuple. The full geometry model may differ for different hitches, implements, and/or different connections or connection strategies e.g. between implement and work machine. An exemplary full geometry model may be found in EP 3 434 086 B1.

In some embodiments, it may be provided that at least one data tuple is provided by moving the implement to a distinct position, and at least one other data tuple is provided by solving a full geometry model. In some embodiments, it may be provided that at least one data tuple is provided by moving the implement to a distinct position, and at least one other data tuple is provided by solving a full geometry model. Alternatively or additionally, at least one data tuple is provided by moving the implement to a distinct position, and at least one other data tuple may be provided by an external server and/or external device.

In some embodiments, at least one, multiple or all data tuples may be provided by an external device. The external device may be or comprise a server. Alternatively or additionally, the external device may be or comprise a mobile device, e.g. a laptop, tablet or smart phone. The external device may be connected to the control unit and/or the data storage. The external device may transmit at least one, multiple or all data tuples to the control unit and/or the data storage.

The offset $\theta$ may correspond to a hinge effect angle $\theta$. The offset $\theta$ may be and/or equal a hinge effect angle $\theta$. In some embodiments, the hinge effect angle $\theta$ can be determined by

$$\theta = a \cdot m + b$$

where m can be a weight or volume of the implement and/or the content of the implement, and a and b can be hinge effect model coefficients. For instance, m can be the weight of the content of a hopper. It may be provided that m is the weight of the content of a container of the implement. Alternatively or additionally, m may be a volume of a container of the implement. The container may store, provide or accommodate content to be dispensed, sprayed or spread by the implement. The content may be liquid and/or solid. The hinge effect model coefficient a and/or the hinge effect model coefficient b may be positive, negative and/or zero.

In some embodiments, it may be provided that the hinge effect coefficients a and b can be determined after the parameters of the regression model, e.g. A, B, C and D, are determined. Alternatively or additionally, the hinge effect coefficients a and b can be determined before or when determining the parameters of the regression model, e.g. before or when A, B, C and D, are determined. It may be provided that the parameters of the regression model, e.g. A, B, C and D are determined for an unloaded and/or empty implement, and the hinge effect model coefficients a and b are determined for an implement with varying or changing weight or mass.

In some embodiments, it may be provided that the method comprises different and/or multiple models and/or equations, which might be stored in a data base, memory or data storage of the control unit, hitch, work vehicle and/or implement. When more than one model or equation is provided, one or more of the models and/or equations may be chosen to determine the top link length. The models and/or equations may be chosen depending on the geometry, type and/or kind of the hitch. Choosing a model and/or equation may comprise recalling, loading, or retrieving a model and/or equation, and/or parameters. In some embodiments, a model might differ from another model by having different parameters. In some embodiments, a model might differ from another model by having different parameters, but have the same terms, formulation, structure, composition, assumptions. In some embodiments, two models may be considered different already when they only differ in the values of at least one parameter. It may be provided that data tuples and/or parameters of more than one regression model may be stored in the data storage. It may be provided that data tuples and/or parameters of more than one regression model may be recalled from the data storage, e.g. when needed or required by the control unit.

Determining the hitch height h may comprise receiving the hitch height from the work vehicle, and/or from a sensor of the work vehicle. Determining and/or receiving the hitch height may comprise interrogating and/or polling a sensor of the work vehicle. In some embodiments, the work vehicle, e.g. tractor, provides a % height, a relative height and/or an absolute height. The height may be a current height of the work vehicle, e.g. over and/or relative to ground. The height may be determined by a rotation or a distance sensor (or any other suitable sensor) on the work vehicle. In some embodiments, determining the hitch height h may comprise measuring or determining a distance between the implement and/or work vehicle over ground, and/or measuring or determining a distance between the hitch over ground.

The method may further comprise changing a lower link arm angle of a lower link arm of the hitch.

It may be provided that the hitch height is controlled. The method may comprise steps for controlling the hitch height. A desired hitch height may be provided. A determined and/or measured hitch height may be compared to the desired hitch height. The determined and/or measured hitch height may be an actual and/or current hitch height. When the determined and/or measured hitch height deviates from the desired hitch height, the hitch and/or the lower link arm may be controlled such that the hitch height is equal to, or at least substantially equal to, the desired hitch height. In some embodiments, the lower link arm may rotate and/or pivot such that the hitch height is equal to, or at least substantially equal to, the desired hitch height. In some embodiments, the desired hitch height may depend on a crop height and/or plant height. Determining the desired hitch height may comprise measuring or determining a distance between the implement over crops or plants, and/or measuring or determining a distance between the hitch over crops or plants. Determining the desired hitch height may comprise determining the height of crops or plants.

It may be provided that after determining the hitch height h, the hitch height can be compared to a desired hitch height. The hitch height h may be changed and/or the hitch may be raised or lowered, when the determined hitch height differs from the desired hitch height. In some embodiments, the changed hitch height can be used and/or employed when determining the top link length l.

A second aspect of the invention relates to a work machine, the work machine comprising a work vehicle and an implement, wherein the work vehicle and/or the work machine comprise a hitch, the hitch having a top link which is extendable such as to change its top link length l, the implement being supported by the hitch, wherein the work machine has a sensor which is configured to determine and/or measure a hitch height h, and wherein the work machine has a control unit which is configured to carry out any of the methods according to the invention.

The control unit may be or comprise a computer device, or the like.

The work vehicle may be or comprise a tractor.

The implement may be or comprises a spreader. The desired inclination angle $\alpha$ may be or comprise a spreader angle. The implement may be or comprise a hopper. The implement may be or comprise a plough. The implement may be or comprises a sprayer. The desired inclination angle $\alpha$ may depend on the kind, type, form and/or dimensions of the implement. The desired inclination angle $\alpha$ may depend on the plants and/or crops the implement is acting on. Alternatively or additionally, the desired inclination angle $\alpha$ may depend on a work strategy, such as e.g. when driving on a main field, driving along a border of the field, driving on the road, folding etc.

In some embodiments, the work machine can have a second sensor, which can be configured to determine and/or measure an inclination of the work vehicle and/or work machine relative to the ground or soil.

Description of embodiments

The invention is further described and disclosed with reference to the following figures:

Fig. 1   an exemplary embodiment of a work machine according to the invention;
Fig. 2   the embodiment of a work machine as shown in fig. 1, where the top link length I has been set such that the inclination angle is equal to the desired inclination angle;
Fig. 3   the embodiment of a work machine as shown in fig. 1 to 2, where the work machine is inclined relative to the ground;
Fig. 4   schematic sketches of inclination angles; and
Fig. 5   a control panel for providing data tuples for determining the parameters.

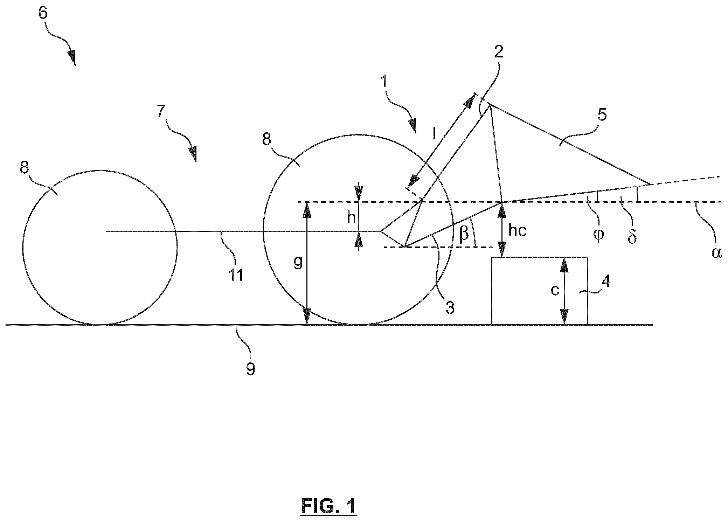

Figs. 1 to 3 show an exemplary embodiment of a work machine 6 according to the invention.

The work machine 6 comprises a work vehicle 7. The work vehicle 7 may be or comprise a tractor. The work machine 6 and/or the work vehicle 7 comprises a hitch 1. The hitch 1 may be connected and/are coupled to the work vehicle 7, and/are be a part of the work vehicle 7. The work machine 6 comprises an implement 5. The implement 5 can be coupled by the hitch 1 to the work vehicle 7.

In some embodiments, the implement 5 can be a spreader. The implement 5 can comprise a hopper. The implement 5 can be configured to spread nutrients, fertilizer or the like, such as to e.g. fertilize or provide nutrients to crops 4 and/or plants.

The hitch 1 may comprise a top link 2 and a lower link arm 3. The top link 2 is extendable, and/or can change its top link length I. The top link 2 can be pivoted and/or rotated, e.g. around a top link support and/or top link hinge. The lower link arm 3 can be pivoted and/or rotated, e.g. around a lower link arm support or hinge. It may be provided that the length of the lower link arm 3 is fixed and/or constant. The lower link arm 3 may be rotated and/or pivoted under a lower link arm angle $\beta$. In some embodiments, the lower link arm angle $\beta$ may be defined with respect to the ground 9, and/or an axis, e.g. a reference axis, of the hinge 1, work vehicle 7 and/or work machine 6. Ground 9 may be a soil.

In some embodiments, a hitch height h may be defined and/or determined depending on at least one of lower link arm angle $\beta$, the length of the lower link arm 3, crop height c of crops 4, and/or the height of the lower link arm 3 over ground 9.

The hitch height h can be defined with respect to a frame 11 of the work vehicle 7. For instance, the hitch height h can be defined with respect to the frame 11 of a tractor. The frame 11 may be a reference frame of the work vehicle 7. The hitch height h can be defined with respect to a reference plane and/or reference line of the work vehicle 7. The frame 11 may be or correspond to the reference plane and/or reference line. The hitch height h may be equal to the distance between an endpoint of the lower link arm 3 and/or a connection point of lower link arm 3 and implement 5 to the frame 11, reference plane and/or reference line.

Alternatively or additionally, the hitch height h may be equal and/or corresponds to a distance of the implement 5, and/or an end of the lower link arm 3, to ground 9 and or to crops 4, such as e.g. a height over crop hc. The hitch height h may be equal to, or at least substantially equal to, a ground height g of the implement 5 and/or the end of the lower link arm 3 to ground 9. The hitch height h may be equal to, or at least substantially equal to, a height of the implement 5 and/or the end of the lower link arm 3 to crops 4, which may in some embodiments be equal to the difference between ground height g and crop height c.

A method according to the invention can be carried out to control for an inclination angle of the implement 5. The inclination angle may be defined relative to the horizon and/or ground 9. The inclination angle may be a current and/or actual inclination angle $\varphi$ of the implement 5. It may be provided that the method controls for the inclination angle to be equal to a desired inclination angle $\alpha$. The desired inclination angle $\alpha$ may be given and/are provided, such that it is a value to be achieved and/or obtained by the method. The desired inclination angle $\alpha$ may be defined relative to the horizon and/or relative to the ground 9. The desired inclination angle $\alpha$ may be defined such that it is positive counterclockwise. However, the definition of the desired inclination angle $\alpha$ may be different, in which case the method can be modified accordingly without any difficulties.

The actual inclination angle $\varphi$ of the implement 5 may be defined relative to the horizon and/or relative to the ground 9. The actual inclination angle $\varphi$ may be defined such that it is positive counterclockwise. However, the definition of the actual inclination angle $\varphi$ may be different, in which case the method can be modified accordingly without any difficulties. The actual inclination angle $\varphi$ may be a true inclination angle of the implement. The actual inclination angle $\varphi$ may be a current inclination of the implement 5. The actual inclination angle $\varphi$ may be identical to the inclination of the implement 5. When the reference planes of the desired inclination angle $\alpha$ and the actual inclination angle $\varphi$ differ, and/or their definitions differ, the method may be easily modified to take these differences into account, e.g. by including a respective angle between the reference planes and or changing signs accordingly.

The inclination angle, the current inclination angle $\varphi$ of the implement 5 and/or the desired inclination angle $\alpha$ may

depend on the inclination of the work machine 6 and/or work vehicle 7. The inclination angle, and/or the actual inclination angle φ, may be controlled and/or defined in comparison or relative to the work machine 6 and/or work vehicle 7, e.g. relative to a longitudinal direction of the work machine 6 and/or work vehicle 7. It may be provided that the inclination angle, and/or the actual inclination angle φ, is not controlled and/or defined in comparison or relative to the horizon, ground 9 or to the soil surface, but only to the work machine 6 and/or work vehicle 7. The actual inclination angle φ may depend on the top link length I and/or the hitch height h.

In some embodiments, the method may further comprise determining an inclination of the work machine 6 and/or work vehicle 7 compared and/or relative to the ground and/or horizon. When an inclination of the work machine 6 and/or work vehicle 7 compared and/or relative to the ground 9 and/or horizon is determined, the inclination angle, and/or the actual inclination angle φ, may be controlled and/or determined relative to the ground 9 and/or horizon by taking the inclination of the work machine 6 and/or work vehicle 7 relative to ground 9 and/or horizon into account.

In order to control the inclination angle, e.g. the actual inclination angle φ, and/or to achieve an inclination of the implement 5 equal to, or at least substantially equal to, the desired inclination angle α, the method sets a top link length l. Setting the top link length l may comprise that the top link 2 extends such that it has length l. In some embodiments, the top link 2 may rotate and/or pivot when extending.

The top link length l may be set and/or controlled such that a difference δ of the actual inclination angle φ and the desired inclination angle α, i.e. $\delta = \varphi - \alpha$, and/or the absolute value of the difference δ, vanishes, is or becomes zero and/or is or becomes substantially zero.

The desired inclination angle α and/or the actual inclination angle φ of the implement 5 may be defined and or measured relative to the work machine 6 and/or work vehicle 7, e.g. to a longitudinal plane of the work machine 6 and/or work vehicle 7, and/or a reference axis or plane of the work machine 6 and/or work vehicle 7. The desired inclination angle α may be defined and or measured as a desired inclination of the implement 5 relative to the work machine 6 and/or work vehicle 7, e.g. to a longitudinal plane of the work machine 6 and/or work vehicle 7, and/or a reference axis or plane of the work machine 6 and/or work vehicle 7. In some embodiments, the inclination angle, e.g. the actual inclination angle φ, and/or the desired inclination angle α, may be 0° when the implement 5, or a desired orientation of the implement 5, is parallel to a longitudinal plane of the work machine 6 and/or work vehicle 7, and/or a reference axis or plane of the work machine 6 and/or work vehicle 7.

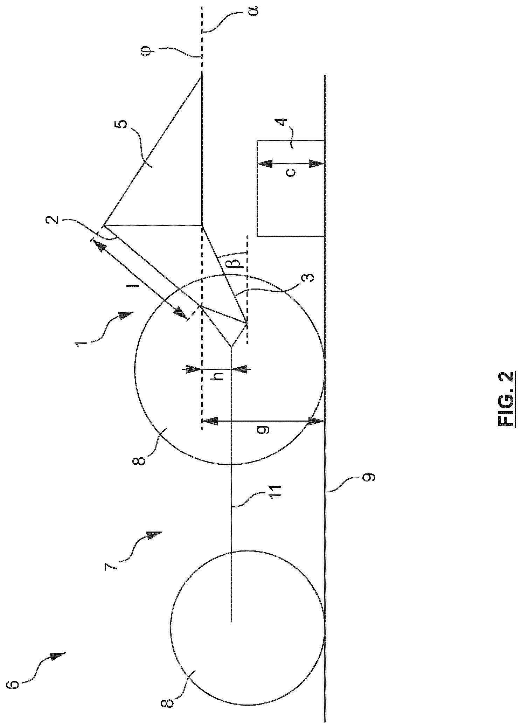

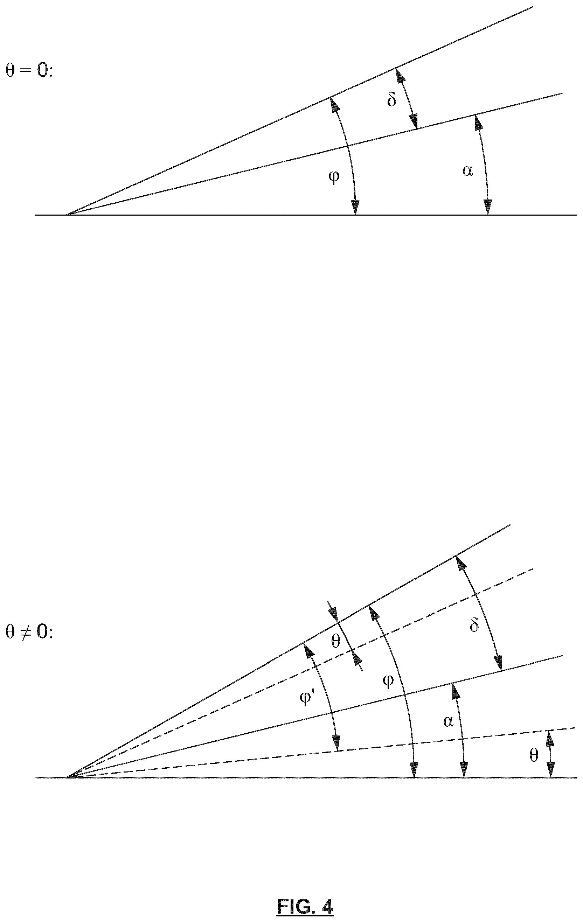

The desired inclination angle α may depend on the crop 4 and/or plants. The desired inclination angle α may vary along a path of the work vehicle 6. The desired inclination angle α may depend on the type and/or kind of the implement 5, and/or the dimensions of the implement 5. In some embodiments, the desired inclination angle α may be 0° (cf. Figs. 1 and 2). It may be provided that the desired the desired inclination angle α may be positive (cf. e.g. Fig. 4), e.g. 4°. In some embodiments, the desired inclination angle α may be any other required and/or suitable value. In some embodiments, the desired inclination angle α may be negative (not shown in the figures).

The top link length l of the top link 3 may be adjusted such that for a given, e.g. determined or measured, hitch height h, a given or desired inclination angle α of the implement 5 is achieved or obtained. That is, the inclination of the implement 5, e.g. the actual inclination angle φ, may be equal to, and/or substantially equal to, the desired inclination angle α when the top link length l is suitable adjusted and/or set. For this, the top link length l is set according to a regression model having the hitch height h and the desired inclination angle α as input variables. The regression model has at least two parameters. The regression model may have more than two, and/or more than four parameters.

In some embodiments, it may be provided that the top link length l is chosen, set and/or adjusted such that the inclination of the implement 5, e.g. the actual inclination angle φ, relative to a reference plane, e.g. ground 9, soil and/or the horizon, vanishes or is substantially zero. In some embodiments, a reference plane different from ground 9 and/or soil may be chosen. In some embodiments, the horizon and ground 9 and/or soil may be differently oriented.

In some embodiments, the regression model can have at least one term proportional to the hitch height h and at least one term proportional to the desired inclination angle α. Alternatively or additionally, the regression model may have at least one term comprising a product of hitch height h and the desired inclination angle α.

In some embodiments, the regression model may be given by

$$l = A \cdot h \cdot \alpha + B \cdot h + C \cdot \alpha + D$$

.

The regression model may have four parameters. A, B, C and D may be parameters of the regression model.

It has been found, surprisingly, that the above equation for the top link length l, and the resulting inclination angle of the implement 5, is highly accurate. In other words, any differences between the inclination angle, e.g. the actual inclination angle φ as resulting from setting the top link length l according to the above equation, and the desired inclination angle α is negligible or even vanishes.

The above equation for the top link length l is relatively simple, but highly accurate. Further, the top link length l can be easily and quickly calculated, such that the control of the inclination of the implement 5 can be carried out quickly and/or on-the-fly. Further, the number of input variables is low, which facilitates the control. In particular, given the parameters A, B, C and D, only the hitch height h and the desired inclination angle $\alpha$ is required. Thus, fewer quantities have to be determined, measured and/or provided, and also errors such as e.g. due to erroneous or inaccurate measurements can be reduced.

The invention is not limited to the above regression model, and/or equation. In some embodiments, the regression model may have fewer or more term. In some embodiments, the regression model may be or comprise at least one non-linear term. The regression model may be a linear regression model. The regression model may be a non-linear regression model.

In some embodiments, the regression model may be or comprise a machine learning model. The regression model and/or the machine learning model may be or comprise a neural network. The parameters of the regression model may be weights and/or biases of the neural network and/or machine learning model. The regression model and/or the machine learning model may be or comprise a kernel machine, e.g. a support vector machine or a relevance vector machine.

Fig. 1 shows a top link length I, such that the implement is inclined at an actual inclination angle $\varphi$. If e.g. the desired inclination angle $\alpha = 0°$, then the top link length I can increase such that the inclination of the implement 5 is equal to, or substantially equal to, the desired inclination angle $\alpha = 0°$, as shown in fig. 2. In other words, in fig. 2 $\varphi = \alpha$ and/or $\delta = 0$.

The desired inclination angle $\alpha$ can be positive, cf. e.g. fig. 4. In some embodiments, the desired inclination angle with $\theta = 0°$ can be negative.

When the top link length I changes, it may be provided that the top link 2 can rotate and/or pivot. When the top link length I changes, it may be provided that the hitch height 5 may be unchanged and/or remain in its position. When the top link length I changes, it may be provided that the lower link arm angle $\beta$ of the lower link arm 3 may not change and/or be constant.

Alternatively or additionally, it may be provided that the lower link arm angle $\beta$ may change and/or that the lower link arm 3 can rotate and/or pivot, when and/or while the top link length I may change and/or the top link 2 extends, retracts, rotates and/or pivots.

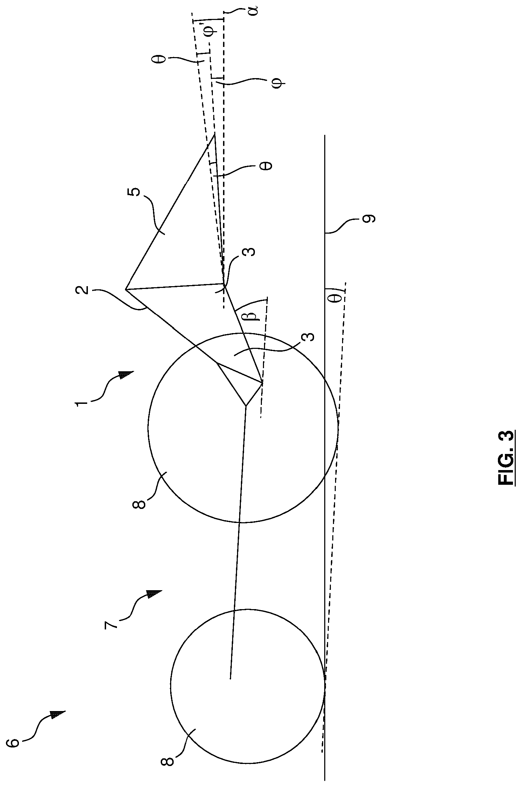

In some embodiments, an offset $\theta$, or offset angle $\theta$, may be taken into account or can be provided to correct the top link length I. For instance, when the parameters of the model, e.g. A, B, C and D, were determined and/or calculated when the work machine 6, work vehicle 7 and/or implement 5 was placed or standing on concrete or solid ground, and then subsequently moves or travels onto soft ground 9, such as e.g. earth, soil, dirt, a field, a plantation, or the like, the work machine 6, work vehicle 7 and/or implement 5 may at least partially sink in. This may result in an offset $\theta$, cf, e,g, fig. 3 or 4.

As can be seen by comparing fig. 1 and fig. 3, the offset $\theta$ may be due to an inclination of the implement 5. This additional inclination can be taken into account when calculating and/or setting the top link length I, such that the desired inclination of the implement 5 may be achieved. In particular, the offset $\theta$ may subtracted from the given desired inclination angle $\alpha$ when calculating the top link length I, e.g. by setting $\alpha \rightarrow \alpha - \theta$. The offset $\theta$ may be defined counterclockwise. For instance, the desired inclination angle $\alpha$ may be modified by the offset before or when setting and/or determining the top link length I. Alternatively or additionally, the regression model may be given by or modified to

$$ l \;=\; A \cdot h \cdot (\alpha - \theta) + B \cdot h + C \cdot (\alpha - \theta) + D, $$

when taking the offset into account and/or modifying the desired inclination $\alpha$ by the offset $\theta$. In this equation, I is top link length, h is the hitch height, and $\alpha$ the desired inclination angle of the implement 5. A, B, C and D are parameters. Alternatively, it may be provided that the offset is added to the desired inclination angle, depending on the definition of the offset $\theta$ and/or the desired inclination angle $\alpha$.

The offset $\theta$ may be defined with respect to the ground 9 and/or horizon. The offset $\theta$ may be defined to be positive in counterclockwise direction. Fig. 3 shows an offset $\theta$, which is different from zero, where $\theta$ is defined such that the value of the offset $\theta$ is negative. Thus, because the implement 5 is rotated by the offset angle $\theta$ relative to the ground 9 and/or horizon, the value of the offset $\theta$ is subtracted from the actual inclination angle $\varphi$ (the value of $\theta$ is negative in fig. 3, so that the actual inclination angle $\varphi$ becomes smaller, cf. fig. 3 compared to fig. 1). In figure 3, $\varphi$ may be the actual inclination angle of the implement. For comparison, $\varphi'$ may be the the angle as seen in fig. 1 ($\varphi'$ of fig. 3 may be equal to $\varphi$ in fig. 1). As the desired inclination angle $\alpha$ is defined to ground 9 and/or the horizon, it is independent of the offset $\theta$. As a consequence, the value of the offset $\theta$ needs to be subtracted from the desired inclination angle $\alpha$ when setting the top link length I, such that the method may control the top link length I such that the difference $\delta$ vanishes (i.e. such that the actual inclination angle $\varphi$ may coincide with the desired inclination angle $\alpha$). By subtracting the offset $\theta$ from the desired inclination angle $\alpha$, the additional inclination due to the offset may be compensated.

This is further detailed with respect to fig. 4. Fig. 4 shows a sketch where the offset $\theta = 0°$ (top) and a sketch where $\theta$ is different from zero (bottom). In the bottom of fig. 4, the angle $\varphi$ of the top sketch is indicated by $\varphi'$, i.e. the $\varphi'$ may correspond to $\varphi(\theta=0)$. In fig. 4, all angles are defined such that they are positive counterclockwise. For better understanding, in the bottom sketch of fig. 4, $\theta > 0°$, without loss of generality (i.e. the following holds also for negative values of $\theta$

accordingly).

For example, in the top sketch of fig. 4, the angles may have exemplary values of $\theta = 0°$, $\alpha = 4°$ and $\varphi = \varphi' = 7°$. Then, $\delta = 7° - 4° = 3°$. Thus, the method would set the top link length l) such that the actual inclination angle $\varphi$ becomes 4° (i.e. the desired inclination angle $\alpha = 4°$) and/or $\delta$ becomes and/or is 0°. For this, the method may use a or the regression model, which may map the inclination angle (and the hitch height h) to a top link length l, and the top link length may be set, adjusted and/or controlled according to a or the regression model for a given desired inclination angle $\alpha$.

On the other hand, for example, in the bottom sketch of fig. 4, the offset $\theta$ is different from zero, e.g. $\theta = 2°$. Compared to the top sketch of fig. 4, the desired inclination angle $\alpha$ is still 4°, as the reference plane for the desired inclination angle $\alpha$, e.g. ground 9 and/or horizon, has not changed (cf. also fig. 1 and 3). Since the implement 5 is additionally inclined by the offset $\theta = 2°$, $\delta$ in the bottom sketch is larger than $\delta$ in the top sketch, i.e. $\delta = \delta(\text{bottom}) = \delta(\text{top}) + \theta = 3° + 2° = 5°$ (when $\theta$ has a negative value, $\delta(\text{bottom}) < \delta(\text{top})$ accordingly). Similarly, the actual inclination angle of the bottom sketch, $\varphi = \varphi' + \theta = 7° + 2° = 9°$ (when $\theta$ has a negative value, $\varphi < \varphi'$) accordingly). In other words, the offset $\theta$ contributes to the "true" or "actual" actual inclination angle $\varphi$ as well as to the corresponding difference $\delta$ when $\theta$ is different from zero. Thus, when setting the top link length for the bottom sketch (i.e. when $\theta$ is different from zero), this additional inclination by the offset $\theta$ has to be taken into account to obtain an inclination of the implement 5 equal to the desired inclination angle $\alpha$ when employing the same model as in the top sketch (e.g. having the same parameters and/or data tuples, in particular). Thus in the bottom sketch, $\delta = \varphi - \alpha = \varphi' + \theta - \alpha = \varphi' - (\alpha - \theta)$, i.e. this may be done by subtracting the offset $\theta$ from the desired inclination angle (since the model, and/or its parameters and/or data tuples, may be given in terms of $\varphi'$ and/or with $\theta = 0°$). That is, one would subtract the offset from the desired inclination angle $\alpha$, i.e. input into the model a modified angle, respectively $\alpha \rightarrow \alpha - \theta$. In case of offset $\theta = 2°$, one would subtract the offset from the desired inclination angle $\alpha$, i.e. input into the model an angle $4° - 2° = 2°$, to compensate for the offset of 2°, respectively $\alpha \rightarrow 4° - 2° = 2°$. Then, the top link length l is set, controlled and/or adjusted based on this input such that the inclination of the implement 5 is as desired. The values given here are only exemplary.

Thus, a model which has been defined, determined and/or calibrated for e.g. $\theta = 0°$ can be modified to include the offset. In some embodiments, the desired inclination angle $\alpha$ may be corrected by the offset $\theta$, such that the difference $\alpha - \theta$ is input into the regression model (cf. e.g. fig. 3 and 4), thereby correcting for the offset $\theta$ so that the desired inclination of the implement 5 relative to the reference plane (e.g. ground 9 and/or horizon in fig. 3 and/or 4) may be achieved and/or obtained, cf. above. When the model has been defined, determined and/or calibrated for $\theta$ different from 0°, that additional offset can be easily taken into account.

In some embodiments, an operator may set, define, choose and/or provide the offset $\theta$ or an offset angle $\theta$, respectively. Alternatively or additionally, the offset $\theta$ and/or the offset angle $\theta$ may be computed by the control unit.

In some embodiments, an offset $\theta$ may be due to tire pressure of at least one tire 8 of the work vehicle 7. When the tire pressure deviates from a design tire pressure and/or specified tire pressure, the work machine 6, work vehicle 7 and/or implement 5 may be offset. In some embodiments, the tire 8 may have a pressure sensor, which may determine the tire pressure. It may be provided that the control unit can receive data from the tire pressure, and calculate and/or take deviations of the tire pressure into account when setting the top link length l. In some other embodiments, the operator may define or set an offset $\theta$ such as to compensate for deviations of tire pressure.

Alternatively or additionally, the offset $\theta$ may be due to a hinge effect, and/or modified by a hinge effect. It may be provided that a hinge effect can be taken into account. The weight of the implement 5 can change and/or vary such that a hinge effect may occur. The hinge effect may result in a tilting of the work vehicle 6 and/or the implement 5. The offset may be modified by a hinge effect angle. In some embodiments, a hinge effect angle may be subtracted from the offset. The offset $\theta$ may correspond to a hinge effect angle $\theta$. It may be provided that the offset $\theta$ may be and/or equal a hinge effect angle $\theta$, and/or that offset may be given by a hinge effect angle $\theta$.

In some embodiments, $\theta$ can capture an influence of a changing weight of the implement 5, and/or a change in the resulting forces due to a changing mass of the implement 5, on the inclination of the implement 5. Thus, the top link length l can be modified accordingly, such that when hinge effects are present the desired inclination angle $\alpha$ can be obtained.

Thus, the additional incline by angle $\theta$ of the implement 5 and/or work vehicle 6 can be taken into account in some embodiments, by subtracting the angle $\theta$ from the desired inclination angle $\alpha$ when setting or calculating the top link length (cf. also the equation for the top link length l above). Alternatively, it may be provided that $\theta$ may be added to the desired inclination angle $\alpha$ when and/or before setting or calculating the top link length l, depending on the definition of $\theta$ and/or the desired inclination angle $\alpha$.

In some embodiments, the hinge effect angle $\theta$ can be determined by

$$\theta = a \cdot m + b$$

, where m is the weight and/or volume of the implement 5 and/or a content of the implement 5, and a and b are hinge effect model coefficients. This equation may be referred to as hinge effect function, although also other hinge effect functions capturing the influence of a varying mass or weight of the implement 5, and/or its content, can be employed. When $\alpha = 0$ and

b ≠ 0, the offset and/or hinge effect angle may be constant.

Hinge effects may occur for instance when the implement 5 is or comprises an implement, whose fill level and weight may vary during operation, such as e.g. when the implement is or comprises a spreader, sprayer and/or hopper. The mass and/or volume m may be measured, and/or given by another equation or relation to other quantities, such as e.g. a volume and/or mass flow, spreading rate or the like.

The work machine 6, work vehicle 7 and/or the implement 5 may comprise a control unit (not shown in the figures). The control unit can be configured to carry out the methods according to the invention. Particularly, the control unit can be configured to control the inclination angle, e.g. the actual inclination angle φ, of the implement 5. The control unit can be configured to determine and/or to set the top link length l. The control unit can control the top link 2, such that the top link 2 can extend or retract to obtain or have a top link length l as determined by the control unit. Alternatively or additionally, the control unit can control the top link 2, such that the top link 2 can rotate and/or pivot. It may be provided that the control unit can control the lower link arm 3, such that the lower link arm 3 can rotate and/or pivot, and/or such that the lower link arm angle β can have a value determined by the control unit. The control unit can be configured to control the hitch height h. The control unit may be configured to control the hitch 1, the lower link arm 3 and/or the implement 5 such that the hitch height h may have a value determined by the control unit. The control unit may be configured to interrogate and/or poll sensors.

The control unit may be or comprise a computer device. The control unit may be or comprise a micro controller, a FPGA, an integrated circuit, or the like.

The control unit may receive and/or send data, or be configured to receive and/or send data. For instance, the control unit may receive data or measurements from sensors. The control unit may have a wireless interface to send or receive data from an external server, an external computer device or the like. The control unit may have one or more computer units, and/or connected sub units or devices.

The work machine 6 and/or work vehicle 7 may have a sensor to determine the hitch height h. The control unit may receive measurements and/or data from the sensor. The control unit may interrogate and/or poll the sensor to determine the hitch height h.

In some embodiments, the desired inclination angle α may be transmitted to the control unit, e.g. from an external device and/or an external server, and/or may depend or vary along a travelling path of the work machine 6 and/or work vehicle 7.

The work machine 6, work vehicle 7 and/or the implement 5 may have at least one sensor (not shown in the figures). The sensor can be or comprise a rotational sensor and/or a length sensor, e.g. in or at the hitch 1. The sensor can be configured to determine and/or measure a hitch height h. The hitch height h may be determined and/or measured to be a distance to the ground 9. In some embodiments, the distance may be determined and/or measured from a point of the lower link arm 3, such as e.g. an end of the lower link arm 3. The end of the lower link arm 3 may be an end of the lower link arm 3 where the implement 5 can be connected to. The end of the lower link arm 3 may be a distal end of the lower link arm 3. Alternatively or additionally, the hitch height h may be determined by taking a position and/or distance of a reference point of the work machine 6 and/or work vehicle 7 to ground 9 into account, and/or a position and/or distance of the hitch 1 to the reference point of the work machine 6 and/or work vehicle 7.

The parameters of the regression model, e.g. A, B, C and D, can be obtained by using data tuples to determine the model parameters. For instance, the data tuples can comprise data which is suitable to carry out a regression. In some embodiments, the data tuples may form a training data set for determining the parameters.

The parameters of the regression model, e.g. A, B, C and D, and/or at least one, multiple or all data tuple for determining the parameters, can be obtained e.g. by a calibration. In some embodiments, a number of distinct positions, e.g. four different positions, of the implement 5 and/or the hinge 1 may be provided. In each position, a data tuple comprising and/or containing hitch height 5, top link length l and reference inclination angle of the implement 5 may be provided, defined, determined, and/or measured.

The reference inclination angle may be defined such that it is positive counterclockwise. In some embodiments, the reference inclination angle may be defined with respect to ground 9, soil and/or horizon.

In each position, at least one of hitch height 5, top link length l and/or reference inclination angle of the implement 5 can be different to those of at least one, several or all other positions. The reference inclination angle may be or correspond to an inclination angle of the implement 5 for given and/or corresponding hitch height 5 and/or top link length l of the implement 5.

In some embodiments, the reference inclination angle and/or the hitch height h may be suitable and/or used to map and/or relate a desired inclination angle α to a corresponding top link length l.

It may be provided that at least one, multiple or all data tuple may be determined by solving a full geometry model of the hitch 1 for the top link length l. The data tuple may then be formed by the top link length l and the corresponding hitch height h and inclination angle of the full geometry model. It may be provided that other geometric variables or inputs of the full geometry model other than hitch height h and inclination angle may be discarded when forming the data tuple. The reference inclination angle may be an inclination angle as determined from the full geometry model, e.g. for a given top link length l and/or hitch height h.

In some embodiments, at least one, multiple or all data tuples may be provided for a given combination of e.g. work vehicle 7, hinge 1 and implement 5. For instance, the data tuples may be transmitted to the control unit, e.g. from an external server or an external computer device.

It may be provided that the number of data tuples is equal to the number of model parameters. Alternatively, the number of data tuples may be larger than the number of model parameters.

In some embodiments, it may be provided that the data tuples are provided before using the implement 5, e.g. before a begin of spreading or fertilizing crops 4 or plants. In some embodiments, an operator may input the data tuples, e.g. via a control panel 10. The work machine 6, work vehicle 7 and/or implement 5 may comprise the control panel 10.

Alternatively or additionally, data tuples, regression model, and/or parameters may be transmitted from an external server or an external computer device to the control unit. When a regression model and/or parameters are transmitted from an external server or an external computer device to the control unit, it may be provided that a determining of the parameters may be unnecessary and/or omitted. It may be provided that the control unit can control for the inclination angle, e.g. the actual inclination angle $\varphi$, using and/or employing the transmitted model and/or parameters.

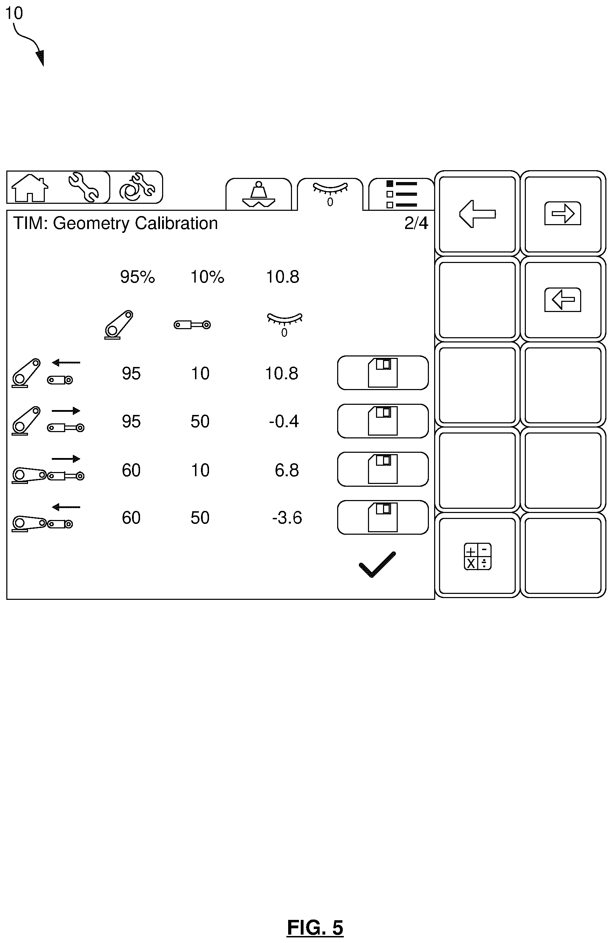

An exemplary control panel is shown in fig. 5. In some embodiments, the operator may input an offset $\theta$, or an offset angle $\theta$, respectively, in or via the control panel 10. It may be provided that the operator can command or trigger the control unit to request one or more of data tuples.

In some embodiments, it may be provided that the implement 5, and/or hinge 1, may be moved into one or more distinct positions, e.g. one or more of the four positions. When the implement 5 and/or hinge 1 is in one of the positions, it may be provided that an operator may give a calibration command, e.g. by pressing a button, whereupon the orientation, distances, angles, height and the like (e.g. one or more of hitch height h, inclination angle and/or top link length l of at least one of implement 5, and/or hinge 1 may be determined and/or measured, and/or assigned or associated with or to a data tuple. For instance, the reference inclination angle may be equal to and/or correspond to the respective determined and/or measured inclination angle. In some embodiments, a data tuple may be created and/or modified when the calibration command is given. The work machine 6, work vehicle 7 and/or implement 5 may have one or more sensors which are configured to determine and/or measure at least one of the orientation, distances, angles, height and the like, in particular one or more of hitch height h, inclination angle and/or top link length l.

Thus, in some embodiments, the operator can provide the data tuples required to define the parameters, e.g. A, B, C and D, by moving and/or transferring the hitch 1 and/or implement 5 in or to the four different positions. It may be provided that the number of distinct positions is equal to the number of data tuples as obtained by the calibration.

In some embodiments, at least one data tuple may be provided by calibration and/or by moving the implement, and at least one other data tuple may be provided by solving a full geometry model and/or received from an external server or computer device. In some embodiments, at least one data tuple may be provided by an external server and/or external computer device which may transmit the data tuple to the control unit, and at least one other data tuple may be provided by a calibration and/or moving the implement, and/or by solving a full geometry model.

It may be provided that the data tuples may be stored in a database, memory or data storage of the control unit, the implement 5, the work machine 6, work vehicle 7 and/or hitch 1. The control unit may retrieve at least one, multiple or all data tuples for determining and/or computing the parameters.

When the data tuples are provided, the parameters, e.g. A, B, C and D, may be determined and/or computed. In some embodiments, the control unit can be configured to determine and/or compute the parameters, e.g. A, B, C and D, given the data tuples.

In some embodiments, the data tuples may be determined, provided, transmitted and/or entered, when the implement 5 has a lowest weight. For example, in some embodiments the implement 5 may be or comprise a spreader and/or a hopper, and the data tuples may be determined, provided, transmitted and/or entered, when the spreader and/or hopper is empty and/or unloaded.

In some embodiments, after providing the data tuples, and/or determining, transmitting and/or entering the data tuples, and/or after determining or computing the parameters, e.g. A, B, C and D, a hinge effect may be determined and/or calibrated. For instance, the coefficients of a hinge effect function, e.g. the hinge effect model coefficients a and b of the hinge effect function above, can be determines and/or provided after providing the data tuples, and/or finding the parameters, e.g. A, B, C and D.

It may be provided that the weight of the implement 5 can be varied, and the coefficients of a hinge effect function, e.g. the hinge effect model coefficients a and b, may be determined and/or found by varying the weight of implement 5. In some embodiments, the top link length l and/or the hitch height h may be held constant when determining the hinge effect and/or the hinge effect coefficients of the hinge effect function. Alternatively or additionally, at least one of top link length l and/or the hitch height h may be varied when determining the hinge effect and/or the coefficients of the hinge effect function.

In some embodiments, it may be provided that the hinge effect coefficients, such as e.g. model coefficients a and b, may be transmitted to the control unit, e.g. from an external server or an external computer device. The control unit may receive the hinge effect coefficients, e.g. from an external server or an external computer device.

In some other embodiments, the hinge effect may be determined and/or provided by the operator. For instance, the operator may load the implement 5, and/or change or vary its weight or mass, and determine or provide either a hinge effect angle θ and/or an inclination angle, such as a measured or actual inclination angle of the implement 5 and/or an inclination angle resulting from or due to the varied weight or mass of the implement 5. In some embodiments, the inclination angle of the implement 5 may be measured by a sensor. In some embodiments, the operator may input the inclination angle and/or the hinge effect angle θ via control panel 10.

The work machine 6, work vehicle 7 and/or the implement 5 may have a weight sensor, which may be configured to determine a weight of the implement 5. Alternatively or additionally, the operator may input the weight of the implement 5, and/or a weight and/or fill level of a content of the implement 5, such as a weight or fill level of nutrients or the like. In some embodiments, the operator may input the weight via the control panel 10.

In some embodiments, the operator may give or input a hinge effect calibration command. The hinge effect calibration command may store inputted values, e.g. of weight, inclination angle, e.g. of the implement 5 and/or hinge effect angle, and/or transmit inputted values to the control unit. Alternatively or additionally, the hinge effect calibration command may initiate a determination and/or measurement of at least one of weight, inclination angle, e.g. of the implement 5, and/or hinge effect angle. In some embodiments, it may be provided that at least some values are determined and/or measured by the operator, and at least some values by a suitable sensor. **In** some other embodiments, it may be provided that at least one value or input as determined or inputted by the operator is checked by a sensor value. For instance, the reference inclination angle may be equal to and/or correspond to the inputted, determined and/or measured inclination angle.

The control unit may be configured to determine the hinge effect coefficients for the hinge effect function, The control unit may be configured to determine the hinge effect model coefficients a and b. The control unit may be configured to compute the hinge effect angle and/or offset.

It may be provided that determining the hinge effect function and/or its hinge effect coefficients before using the work machine 6, e.g. before spreading nutrients and/or fertilizing crops 4 and/or plants.

When the number of data tuples is equal to the number of parameters of the regression model, the parameters, e.g. A, B, C and D, can be determined and/or computed by solving a system $M \cdot x = t$, where M is a matrix comprising the reference inclination angles and the hitch heights h of the data tuples, x is a vector comprising the parameters, e.g. A, B, C and D, to be determined and/or computed, and t is a vector comprising the top link lengths of the data tuples. In other words, the data tuples can be determined by solving the system for x, by $x = M^{-1} b$.

Particularly, the matrix M may be given by

$$
\begin{bmatrix}
\text{hitch height * inclination angle [data tuple 1]} & \text{hitch height [data tuple 1]} & \text{inclination angle [data tuple 1]} & 1 \\
\text{hitch height * inclination angle [data tuple 2]} & \text{hitch height [data tuple 2]} & \text{inclination angle [data tuple 2]} & 1 \\
\text{hitch height * inclination angle [data tuple 3]} & \text{hitch height [data tuple 3]} & \text{inclination angle [data tuple 3]} & 1 \\
\text{hitch height * inclination angle [data tuple 4]} & \text{hitch height [data tuple 4]} & \text{inclination angle [data tuple 4]} & 1 \\
\end{bmatrix}
$$

For instance, the matrix M may be given, as example, by

$$
\begin{bmatrix}
620 & 100 & 6.2 & 1 \\
-180 & 100 & -1.8 & 1 \\
-382.8 & 66 & -5.8 & 1 \\
231 & 66 & 3.5 & 1 \\
\end{bmatrix}
$$

For example, when the top link length of data tuple 1 is 13.7, the top link length of data tuple 2 is 41.9, the top link length of data tuple 1 is 41.9 and the top link length of data tuple 4 is 7.3, then given the exemplary matrix M the parameter A = 0.005748, B = 0.448044, C = -4.09979 and D = -9.2494.

When the number of data tuples is equal to the number of parameters, the regression model may perfectly fit the data tuples.

When the number of data tuples is larger than the number of parameters of the regression model, the parameters, e.g. A, B, C and D, can be determined and/or computed by optimizing a system

$$M \cdot x = t + \varepsilon,$$

where M is a matrix comprising the reference inclination angles and the hitch heights h of the data tuples, x is a vector comprising the parameters, e.g. A, B, C and D, to be determined and/or computed, t is a vector comprising the top link lengths of the data tuples and $\varepsilon$ is an error. Optimizing the system may comprise minimizing the error $\varepsilon$. The error $\varepsilon$ may be defined e.g. as root-mean-square error (rms error). However, the definition of the error $\varepsilon$ is not necessarily limited to the rms error.

Alternatively or additionally, when the regression model is or comprises a machine learning model, the parameters may be determined by a machine learning algorithm, where the data tuples may be training data. The machine learning algorithm may be a supervised learning algorithm. The machine learning algorithm may be or comprise a backpropagation algorithm. The machine learning algorithm may comprise minimizing an error. The regression models are only exemplary.

In some embodiments, a pre-configured model with pre-configured parameters may be provided. The pre-configured model may be stored in the control unit and/or data storage, e.g. memory. Alternatively or additionally, the pre-configured model may be transmitted from an external server and/or external computer device to the control unit. The pre-configured model may be or comprise a machine learning model. The pre-configured parameters may be or comprise weights and/or biases of the pre-configured machine learning model. The pre-configured model may be updated using the data tuples. In particular, the parameters of the pre-configured model may be updated using the data tuples. In some embodiments, the number of data tuples required to update the pre-configured model such as to adapt the model to a specific kind or type of implement, and/or to an implement of different shape, form, or dimension, may be significantly lower than the number of data tuples required to determine the parameters of a new regression model with similar accuracy, e.g. (but not limited to) when the pre-configured model is a machine learning model. Thereby, the method for controlling the inclination angle, e.g. the actual inclination angle $\varphi$, of an implement 5 may also be well-suited when different implements are to be used, since the time and complexity required to set up the regression model may be drastically reduced.

Then, for a given desired inclination angle $\alpha$ and hitch height, the corresponding top link length I can be determined with the parameters, e.g. with A, B, C and D.

The data tuples and/or the parameters, e.g. A, B, C and D, and/or the regression model, may be stored and/or saved in a data storage, memory or database. The control unit may comprise the memory, database and/or data storage.

It may be provided that also the hitch height h can be controlled. The control unit may be configured to control the hitch height h. The hitch height of hitch 1 can be determined, and compared to a desired hitch height. In some embodiments, when the current or actual hitch height deviates from the desired hitch height, the lower link arm 3 may be rotated and/or pivoted such that the actual or current hitch height is equal to, or substantially equal to, the desired hitch height. The hitch height may be determined and/or measured by a suitable sensor.

The desired hitch height may depend on the crops 4 and/or plants, and/or the implement 5. it may be provided that the desired hitch height may change and/or vary when or while the work machine 6, the work vehicle 7 and/or the implement 5 is operated.

It may be provided that the control of hitch height h is combined with the control of the inclination angle. In some embodiments, the hitch height may be controlled simultaneously as the inclination angle. In some embodiments, the hitch height as given or controlled, and/or the desired hitch height, may be inputted into the equation for the top link length I.

In some embodiments, the desired inclination angle and/or the desired hitch height may be transmitted to the control unit, e.g. from an external device and/or an external server, and/or may depend or vary along a travelling path of the work machine 6 and/or work vehicle 7.

The features disclosed in the claims, the description and the figures may be relevant for the realization of the invention, in any combination.

List of reference numerals

1    hitch
2    top link
3    lower link arm
4    crops

5 implement
6 work vehicle
7 work machine
8 wheel
9 ground
10 control panel
11 frame
α desired inclination angle
φ actual inclination angle
β lower link arm angle
θ offset angle
l top link length
h hitch height
g ground height
c crop height
hc height over crop

**Claims**

1. A method for controlling an inclination angle of an implement (5) for a work machine (6), the method comprising the steps:

   - providing a desired inclination angle α of the implement (5);
   - determining a hitch height h of a hitch (1) supporting the implement (5);
   - Setting a top link length l of a top link (2) of the hitch (1), preferably such that a actual inclination angle φ of the implement (5) is equal to the desired inclination angle α, **characterised in that** the top link length l is determined by a regression model having the hitch height h and the desired inclination angle α as input variables, the regression model having at least two parameters, wherein preferably the regression model has at least one term related to and/or proportional to the hitch height h and at least one term related to and/or proportional to the desired inclination angle α and/or at least one term comprising a product of hitch height h and the desired inclination angle α.

2. The method of claim 1, wherein the regression model is given by

$$l = A \cdot h \cdot \alpha + B \cdot h + C \cdot \alpha + D$$

the regression model comprising four parameters A, B, C and D.

3. The method of any of the preceding claims, wherein before setting the top link length l and/or when setting the top link length l, an offset θ is subtracted from the desired inclination angle α, $\alpha \rightarrow \alpha - \theta$.

4. The method of any of the preceding claims, wherein the parameters of the regression model, preferably the parameters A, B, C and D, are determined by providing a number of data tuples which is equal to or larger than the number of parameters, each data tuple comprising a top link length l, a hitch height h and a reference inclination angle of the implement (5).

5. The method of claim 4 wherein the parameters of the regression model, preferably the parameters A, B, C and D, are determined by solving a system $M \cdot x = t$ when the number of parameters is equal to the number of data tuples, and/or wherein the parameters of the regression model, preferably the parameters A, B, C and D, are determined by minimizing an error $\varepsilon$ of a system $M \cdot x = t + \varepsilon$, when the number of parameters is smaller than the number of data tuples, where M is a matrix comprising the reference inclination angles and the hitch heights h of the data tuples, x is a vector comprising the parameters, and t is a vector comprising the top link lengths of the data tuples.

6. The method of claim 4 or 5, wherein at least one, multiple or all data tuples are provided by a calibration, wherein the implement (5) is moved to a distinct position for each of data tuple to be provided by the calibration, such that in each position, at least one of top link length l, hitch height h and/or reference inclination angle of the implement (5) is different.

7. The method of claim 6, wherein after moving the implement (5) in any of the distinct positions, the top link length I, hitch height h and reference inclination angle of the implement (5) are determined, and/or measured, and stored in a data storage.

8. The method of any of the preceding claims 4 to 7, wherein at least one, multiple or all data tuples are provided by solving a full geometry model of the hitch (1) for the top link length I.

9. The method of any of the preceding claims 4 to 8, wherein at least one, multiple or all data tuples are provided by an external device.

10. The method of any of the preceding claims 3 to 9, wherein the offset $\theta$ corresponds to and/or is a hinge effect angle $\theta$, wherein preferably the hinge effect angle $\theta$ is determined by

$$\theta = a \cdot m + b \quad ,$$

where m is a weight or volume of the implement (5), and/or where m is a weight or volume of a content of the implement (5), and a and b are hinge effect model coefficients.

11. The method of any of the preceding claims, wherein after determining the hitch height h, the hitch height is compared to a desired hitch height, wherein the hitch height h is changed when the determined hitch height differs from the desired hitch height, wherein preferably the changed hitch height is used when determining the top link length I.

12. The method of any of the preceding claims, wherein the method further comprises changing a lower link arm angle $\beta$ of a lower link arm (3) of the hitch (1).

13. A work machine (6), the work machine (6) comprising a work vehicle (7) and an implement (5), wherein the work vehicle (7) and/or the work machine (6) comprise a hitch (1), the hitch (1) having a top link (2) which is extendable such as to change its top link length I, the implement (5) being supported by the hitch (1), wherein the work machine (6) has a sensor which is configured to determine and/or measure a hitch height h, and wherein the work machine (6) has a control unit which is configured to carry out the method of any of the preceding claims 1 to 12.

14. The work machine (6) of claim 13, wherein the implement (5) is or comprises a spreader, and/or wherein the desired inclination angle $\alpha$ is or comprises a spreader angle.

15. The work machine (6) of claim 13 or 14, wherein the work machine (6) has a second sensor, which is configured to determine and/or measure an inclination of the work vehicle (7) and/or work machine (6) relative to the ground (9) and/or soil.

**Patentansprüche**

1. Verfahren zum Steuern eines Neigungswinkels eines Arbeitsgeräts (5) für eine Arbeitsmaschine (6), wobei das Verfahren die folgenden Schritte umfasst:

- Bereitstellen eines gewünschten Neigungswinkels $\alpha$ des Arbeitsgeräts (5);
- Bestimmen einer Aufhängungshöhe h einer das Arbeitsgerät (5) tragenden Aufhängung (1);
- Einstellen einer Oberlenkerlänge I eines Oberlenkers (2) der Aufhängung (1), vorzugsweise derart, dass ein tatsächlicher Neigungswinkel $\varphi$ des Arbeitsgeräts (5) gleich dem gewünschten Neigungswinkel $\alpha$ ist, **dadurch gekennzeichnet, dass** die Oberlenkerlänge I durch ein Regressionsmodell bestimmt wird, das die Aufhängungshöhe h und den gewünschten Neigungswinkel $\alpha$ als Eingangsvariablen aufweist, wobei das Regressionsmodell mindestens zwei Parameter aufweist, wobei das Regressionsmodell vorzugsweise mindestens einen Term, der sich auf die Aufhängungshöhe h bezieht und/oder zu dieser proportional ist, und mindestens einen Term, der sich auf den gewünschten Neigungswinkel $\alpha$ bezieht und/oder zu diesem proportional ist, und/oder mindestens einen Term aufweist, der ein Produkt der Aufhängungshöhe h und des gewünschten Neigungswinkels $\alpha$ umfasst.

2. Verfahren nach Anspruch 1, wobei das Regressionsmodell gegeben ist durch

$$l = A \cdot h \cdot \alpha + B \cdot h + C \cdot \alpha + D$$

, wobei das Regressionsmodell vier Parameter A, B, C und D umfasst.

3. Verfahren nach einem der vorhergehenden Ansprüche, wobei vor dem Einstellen der Oberlenkerlänge l und/oder beim Einstellen der Oberlenkerlänge l ein Versatz $\theta$ von dem gewünschten Neigungswinkel $\alpha$ subtrahiert wird, $\alpha \rightarrow \alpha$ - $\theta$.

4. Verfahren nach einem der vorhergehenden Ansprüche, wobei die Parameter des Regressionsmodells, vorzugsweise die Parameter A, B, C und D, durch Bereitstellen einer Anzahl von Datentupeln bestimmt werden, die gleich oder größer als die Anzahl von Parametern ist, wobei jedes Datentupel eine Oberlenkerlänge l, eine Aufhängungshöhe h und einen Referenzneigungswinkel des Arbeitsgeräts (5) umfasst.

5. Verfahren nach Anspruch 4, wobei die Parameter des Regressionsmodells, vorzugsweise die Parameter A, B, C und D, durch Lösen eines Systems $M \cdot x = t$ bestimmt werden, wenn die Anzahl von Parametern gleich der Anzahl von Datentupeln ist, und/oder wobei die Parameter des Regressionsmodells, vorzugsweise die Parameter A, B, C und D, durch Minimieren eines Fehlers $\varepsilon$ eines Systems $M \cdot x = t + \varepsilon$ bestimmt werden, wenn die Anzahl von Parametern kleiner als die Anzahl von Datentupeln ist, wobei M eine Matrix ist, die die Referenzneigungswinkel und die Aufhängungshöhen h der Datentupel umfasst, x ein Vektor ist, der die Parameter umfasst, und t ein Vektor ist, der die Oberlenkerlängen der Datentupel umfasst.

6. Verfahren nach Anspruch 4 oder 5, wobei mindestens eines, mehrere oder alle Datentupel durch eine Kalibrierung bereitgestellt werden, wobei das Arbeitsgerät (5) für jedes der durch die Kalibrierung bereitzustellenden Datentupel in eine bestimmte Position bewegt wird, so dass in jeder Position mindestens eines von der Oberlenkerlänge l, der Aufhängungshöhe h und/oder dem Referenzneigungswinkel des Arbeitsgeräts (5) unterschiedlich ist.

7. Verfahren nach Anspruch 6, wobei nach dem Bewegen des Arbeitsgeräts (5) in eine der bestimmten Positionen die Oberlenkerlänge l, die Aufhängungshöhe h und der Referenzneigungswinkel $\alpha$ des Arbeitsgeräts (5) bestimmt und/oder gemessen und in einem Datenspeicher gespeichert werden.

8. Verfahren nach einem der vorhergehenden Ansprüche 4 bis 7, wobei mindestens eines, mehrere oder alle Datentupel durch Lösen eines Vollgeometriemodells der Aufhängung (1) für die Oberlenkerlänge l bereitgestellt werden.

9. Verfahren nach einem der vorhergehenden Ansprüche 4 bis 8, wobei mindestens eines, mehrere oder alle Datentupel durch eine externe Vorrichtung bereitgestellt werden.

10. Verfahren nach einem der vorhergehenden Ansprüche 3 bis 9, wobei der Versatz $\theta$ einem Scharnierwirkungswinkel $\theta$ entspricht und/oder ein Scharnierwirkungswinkel $\theta$ ist, wobei vorzugsweise der Scharnierwirkungswinkel $\theta$ bestimmt wird durch

$$\theta = a \cdot m + b \, ,$$

wobei m ein Gewicht oder Volumen des Arbeitsgeräts (5) ist und/oder wobei m ein Gewicht oder Volumen eines Inhalts des Arbeitsgeräts (5) ist und a und b Scharnierwirkungsmodellkoeffizienten sind.

11. Verfahren nach einem der vorhergehenden Ansprüche, wobei nach dem Bestimmen der Aufhängungshöhe h die Aufhängungshöhe mit einer gewünschten Aufhängungshöhe verglichen wird, wobei die Aufhängungshöhe h geändert wird, wenn sich die bestimmte Aufhängungshöhe von der gewünschten Aufhängungshöhe unterscheidet, wobei vorzugsweise die geänderte Aufhängungshöhe beim Bestimmen der Oberlenkerlänge l verwendet wird.

12. Verfahren nach einem der vorhergehenden Ansprüche, wobei das Verfahren ferner das Ändern eines Unterlenkerarmwinkels $\beta$ eines Unterlenkerarms (3) der Aufhängung (1) umfasst.

13. Arbeitsmaschine (6), wobei die Arbeitsmaschine (6) ein Arbeitsfahrzeug (7) und ein Arbeitsgerät (5) umfasst, wobei das Arbeitsfahrzeug (7) und/oder die Arbeitsmaschine (6) eine Aufhängung (1) umfassen, wobei die Aufhängung (1) einen Oberlenker (2) aufweist, der ausfahrbar ist, um seine Oberlenkerlänge l zu ändern, wobei das Arbeitsgerät (5) von der Aufhängung (1) getragen wird, wobei die Arbeitsmaschine (6) einen Sensor aufweist, der eingerichtet ist, eine Aufhängungshöhe h zu bestimmen und/oder zu messen, und wobei die Arbeitsmaschine (6) eine Steuereinheit aufweist, die eingerichtet ist, das Verfahren nach einem der vorhergehenden Ansprüche 1 bis 12 auszuführen.

**14.** Arbeitsmaschine (6) nach Anspruch 13, wobei das Arbeitsgerät (5) ein Streuer ist oder umfasst, und/oder wobei der gewünschte Neigungswinkel α ein Streuerwinkel ist oder umfasst.

**15.** Arbeitsmaschine (6) nach Anspruch 13 oder 14, wobei die Arbeitsmaschine (6) einen zweiten Sensor aufweist, der eingerichtet ist, eine Neigung des Arbeitsfahrzeugs (7) und/oder der Arbeitsmaschine (6) relativ zu dem Boden (9) und/oder der Erde zu bestimmen und/oder zu messen.

**Revendications**

**1.** Procédé de commande d'un angle d'inclinaison d'un outil (5) pour une machine de travail (6), le procédé comprenant les étapes suivantes :

- prévision d'un angle d'inclinaison souhaité α de l'outil (5) ;
- détermination de la hauteur d'attelage h d'un attelage (1) supportant l'outil (5) ;
- réglage d'une longueur de bras supérieur l d'un bras supérieur (2) de l'attelage (1), de préférence de telle sorte qu'un angle d'inclinaison réel φ de l'outil (5) soit égal à l'angle d'inclinaison souhaité α, **caractérisé en ce que**

la longueur l du bras supérieur étant déterminée par un modèle de régression ayant comme variables d'entrée la hauteur h de l'attelage et l'angle d'inclinaison souhaité α, le modèle de régression ayant au moins deux paramètres, le modèle de régression comportant de préférence au moins un terme lié et/ou proportionnel à la hauteur h de l'attelage et au moins un terme lié et/ou proportionnel à l'angle d'inclinaison souhaité α et/ou au moins un terme comprenant un produit de la hauteur h de l'attelage et de l'angle d'inclinaison souhaité α.

**2.** Procédé selon la revendication 1, dans lequel le modèle de régression est donné par

$$l = A \cdot h\,\alpha + B \cdot h + C \cdot \alpha + D,$$

le modèle de régression comprenant quatre paramètres A, B, C et D.

**3.** Procédé selon l'une quelconque des revendications précédentes, dans lequel, avant de régler la longueur de bras supérieur l et/ou lors du réglage de la longueur de bras supérieur l, un décalage $\Theta$ est soustrait de l'angle d'inclinaison souhaité α, $\alpha \to \alpha - \Theta$.

**4.** Procédé selon l'une quelconque des revendications précédentes, dans lequel les paramètres du modèle de régression, de préférence les paramètres A, B, C et D sont déterminés en fournissant un nombre de tuples de données qui est égal ou supérieur au nombre de paramètres, chaque tuple de données comprenant une longueur de bras supérieur l, une hauteur d'attelage h et un angle d'inclinaison de référence de l'outil (5).

**5.** Procédé selon la revendication 4, dans lequel les paramètres du modèle de régression, de préférence les paramètres A, B, C et D, sont déterminés en résolvant un système $M \cdot x = t$ lorsque le nombre de paramètres est égal au nombre de tuples de données, et/ou dans lequel les paramètres du modèle de régression, de préférence les paramètres A, B, C et D, sont déterminés par minimisation d'une erreur $\acute{\varepsilon}$ d'un système $M \cdot x = t + \varepsilon$, lorsque le nombre de paramètres est inférieur au nombre de tuples de données, M étant une matrice comprenant les angles d'inclinaison de référence et les hauteurs d'attelage h des tuples de données, x étant un vecteur comprenant les paramètres, et t étant un vecteur comprenant les longueurs de bras supérieur des tuples de données.

**6.** Procédé selon la revendication 4 ou 5, dans lequel au moins un, plusieurs ou tous les blocs de données sont fournis par un étalonnage, l'outil (5) étant déplacé vers une position distincte pour chacun des tuples de données à fournir par l'étalonnage, de sorte que, dans chaque position, au moins l'un parmi la longueur de bras supérieur l, la hauteur d'attelage h et/ou l'angle d'inclinaison de référence de l'outil (5) est différent.

**7.** Procédé selon la revendication 6, dans lequel, après avoir déplacé l'outil (5) dans l'une quelconque des positions distinctes, la longueur de bras supérieur l, la hauteur d'attelage h et l'angle d'inclinaison de référence de l'outil (5) sont déterminés, et/ou mesurés, et stockés dans une mémoire de données.

8. Procédé selon l'une quelconque des revendications précédentes 4 à 7, dans lequel au moins un, plusieurs ou tous les tuples de données sont fournis en résolvant un modèle géométrique complet de l'attelage (1) pour la longueur de bras supérieur l.

9. Procédé selon l'une quelconque des revendications précédentes 4 à 8, dans lequel au moins un, plusieurs ou tous les tuples de données sont fournis par un dispositif externe.

10. Procédé selon l'une quelconque des revendications précédentes 3 à 9, dans lequel le décalage $\Theta$ correspond à et/ou est un angle d'effet de charnière $\Theta$, l'angle d'effet de charnière $\Theta$ étant de préférence déterminé par

$$\Theta = a \cdot M + b,$$

où m est un poids ou un volume de l'outil (5), et/ou où m est un poids ou un volume d'un contenu de l'outil (5), et a et b sont des coefficients de modèle à effet de charnière.

11. Procédé selon l'une quelconque des revendications précédentes, dans lequel, après détermination de la hauteur d'attelage h, la hauteur d'attelage est comparée à une hauteur d'attelage souhaitée, la hauteur d'attelage h étant modifiée lorsque la hauteur d'attelage déterminée diffère de la hauteur d'attelage souhaitée, la hauteur d'attelage modifiée étant de préférence utilisée lors de la détermination de la longueur de bras supérieur l.

12. Procédé selon l'une quelconque des revendications précédentes, dans lequel le procédé comprend en outre la modification d'un angle $\beta$ de bras de liaison inférieur d'un bras de liaison inférieur (3) de l'attelage (1).

13. Machine de travail (6), la machine de travail (6) comprenant un véhicule de travail (7) et un outil (5), dans laquelle le véhicule de travail (7) et/ou la machine de travail (6) comprenant un attelage (1), l'attelage (1) ayant un bras supérieur (2) qui est extensible de manière à modifier sa longueur de bras supérieur (1), l'outil (5) étant supporté par l'attelage (1), la machine de travail (6) comportant un capteur qui est configuré pour déterminer et/ou mesurer une hauteur d'attelage h, et la machine de travail (6) comportant une unité de commande qui est configurée pour exécuter le procédé selon l'une quelconque des revendications précédentes 1 à 12.

14. Machine de travail (6) selon la revendication 13, dans laquelle l'outil (5) est ou comprend un écarteur, et/ou l'angle d'inclinaison souhaité $\alpha$ est ou comprend un angle d'écarteur.

15. Machine de travail (6) selon la revendication 13 ou 14, la machine de travail (6) présentant un second capteur qui est configuré pour déterminer et/ou mesurer une inclinaison du véhicule de travail (7) et/ou de la machine de travail (6) par rapport au sol (9) et/ou à la terre.

**FIG. 1**

**FIG. 2**

**FIG. 3**

EP 4 544 891 B1

θ = 0:

θ ≠ 0:

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3434086 B1